# EUROPÄISCHE PATENTSCHRIFT

(11) **EP 2 857 242 B1**
(45) Veröffentlichungstag und Bekanntmachung des Hinweises auf die Patenterteilung: **12.09.2018**
(21) Anmeldenummer: 14003332.5
(22) Anmeldetag: 26.09.2014
(51) Int. Cl.: B60J 7/10, B62D 33/04, B60J 7/00

(54) **Planenhebevorrichtung**
Awning lifting device
Dispositif de levage de bâches

(30) Priorität: 02.10.2013 DE 202013008683 U
(43) Veröffentlichungstag der Anmeldung: 08.04.2015
(73) Patentinhaber: Seewald, Marc, 75433 Maulbronn (DE)
(72) Erfinder: Seewald, Marc, 75433 Maulbronn (DE)
(74) Vertreter: Wacker, Jost Oliver

(56) Entgegenhaltungen:
- EP-A2- 0 897 827
- WO-A1-95/22472
- DE-U1-202005 005 953
- US-A- 4 060 273

## Beschreibung

Die Erfindung betrifft eine Planenhebevorrichtung für ein mit einer Plane überspannbares Fahrzeugdach, wie insbesondere eines Transportfahrzeuges oder eines Anhängers, nach dem Oberbegriff des Anspruchs 1 sowie einen Fahrzeugaufbau mit wenigstens einer solchen Planenhebevorrichtung. Diese Planenhebevorrichtung, weist einen Dachspriegel mit einer Oberseite auf, an der die Plane anlegbar und ein Hebeelement vorgesehen ist, mittels der die anliegende Plane angehoben werden kann.

Derartige Planenhebevorrichtungen sind von Planenaufliegern für eine seitliche Beladung von Transportfahrzeugen oder Anhängern bekannt und dienen zur Verhinderung von größeren Niederschlagsansammlungen und Eisplattenbildung auf der Plane. Hierzu wird der dachseitige Teil der Plane, insbesondere bei längeren Standzeiten des Transportfahrzeugs oder Anhängers während der Wintermonate, mittels der Planenhebevorrichtung in einem innen liegenden Bereich soweit angehoben, dass die auf das Dach treffenden Niederschläge größtenteils ablaufen können.

Auf diese Weise können größere Niederschlagsansammlungen vermieden werden, die sonst zu Wasserschäden an Ladung oder Fahrzeug oder zur dachseitigen Ausbildung von Eisplatten oder größeren Schneemassen führen könnten. Diese Niederschlagsansammlungen oder Eisplatten müssen andernfalls vor jeder Fahrt von dem fahrzeugführenden Personal entfernt werden, um ein Herabfallen während der Fahrt zu vermeiden.

Aus US 4,060,273 ist eine Planenhebevorrichtung bekannt, die zum kompletten Öffnen beziehungsweise Abdecken einer mit einer Plane verschließbaren offenen Mulde dient. Hierzu ist ein sich über die gesamte Länge der offenen Mulde erstreckendes klappbares Gestänge vorgesehen, an dem die betreffende Plane gelagert ist.

WO 95/22472 A1 beschreibt eine Vorrichtung zur Enteisung eines Fahrzeugdaches, das eine an der Oberseite eines Fahrzeugaufbaus anlegbare Plane aufweist. Der Fahrzeugaufbau weist dabei mehrere Spriegel auf, an deren Oberseite eine Trägerschiene in Längsrichtung angeordnet ist. An der Trägerschiene ist ein Hebeelement befestigt, mittels dem die anliegende Plane anhebbar und wieder senkbar ist.

In EP 0 897 827 A2 ist eine Vorrichtung zum Entfernen von Eis-, Schnee- und Wasseransammlungen auf Planen beschrieben, bei der zwei durch Flachprofile gebildete Elemente mittels eines Antriebs voneinander beabstandet werden können. Die Flachprofile liegen hierzu in Längsrichtung des betreffenden Fahrzeugs quer zu den Spriegeln auf einem mittigen Längsstab eines Aufbaugerüsts auf.

Aus der DE 20 2005 005 953 U1 ist eine Spann-Hebevorrichtung für ein Fahrzeugplanenoberteil von LKW und LKW-Anhängern bekannt, die in einem Dachbereich eine Mehrzahl von relativ eng stehenden Querstreben aufweisen. Die Spann-Hebevorrichtung weist dabei einen Luftschlauch auf, der sich senkrecht zu den Querstreben erstreckt und zwischen der Plane und den Querstreben angeordnet ist. Der Luftschlauch kann mittels eines Kompressors aufgeblasen werden, wobei dessen Oberseite von den als Auflager dienenden Querstreben abgehoben wird und den Dachbereich der Plane in dem betreffenden sich in Längsrichtung des Fahrzeugs erstreckenden mittleren Flächenabschnitt anhebt.

Nachteilig an diesen Spann-Hebevorrichtungen ist, dass der Luftschlauch nur bei Fahrzeugaufbauten verwendet werden kann, die unterhalb des anzuhebenden Bereichs der Dachplane relativ eng stehende Auflagerflächen für den Luftschlauch vorsehen. Hierdurch sind diese Spann-Hebevorrichtung insbesondere nicht für Fahrzeuge oder Anhänger geeignet, die über das Dach be- und entladen werden, wie insbesondere entsprechende Schubboden-, Kippsattelauflieger oder offene Mulden. Diese weisen nämlich relativ große Abstände zwischen den dachseitigen Querstreben beziehungsweise Dachspriegeln von beispielsweise über 1,0 m oder auch über 2,0 m auf, um eine schnelle Öffnung des Fahrzeugdaches zu ermöglichen. Diese großen Abstände zwischen zwei benachbarten Querstreben beziehungsweise zwischen einer Querstrebe und dem übrigen Fahrzeugaufbau ermöglichen keine ausreichend enge Ausbildung von Stützbereichen für einen Luftschlauch.

Die Aufgabe der Erfindung ist es, eine Planenhebevorrichtung und einen Fahrzeugaufbau mit einer solchen Planenhebevorrichtung zur Verfügung zu stellen, die insbesondere für Fahrzeuge und Anhänger geeignet ist, die über das Dach beladen werden.

Diese Aufgabe wird durch eine Planenhebevorrichtung mit den Merkmalen des Anspruchs 1 gelöst. Dabei weist das Hebeelement eine Hubfläche auf, die mittels einer vollständig am Dachspriegel gelagerten einzelnen Hubeinrichtung gegenüber diesem beabstandbar ist. Auf diese Weise bildet der Dachspriegel zusammen mit der Hubeinrichtung eine bauliche Einheit. Beim Aus- und Einbau des wenigstens einen Dachspriegels kann dieser somit zusammen mit dem jeweiligen einzelnen Hebeelement und der Hubfläche gehandhabt werden, was ein besonders einfaches und schnelles Öffnen und Schließen des Daches eines betreffenden Fahrzeug- oder Anhängeraufbaus ermöglicht. Erfindungsgemäß weist die Hubeinrichtung ein mittels eines Betätigungsmittels verstellbares Gestänge auf. Durch die Verwendung eines solchen Gestänges kann die Hubfläche über eine relativ große Hubhöhe angehoben werden. Dies ermöglicht wiederum ein ausreichendes Anheben der betreffenden Plane über eine relativ große Fläche hinweg. Auf diese Weise kann beispielsweise bei Aufbauten mit einer Länge bis zu 5 m eine einzige Planenhebevorrichtung ausreichen, um ein ausreichendes Abfließen von dachseitig anfallenden Niederschlägen zu gewährleisten. Bei größeren Fahrzeug- oder Anhängeraufbauten kann zudem zwischen den verwendeten Dachspriegeln beziehungsweise Planhebevorrichtungen ein relativ großer Abstand von beispielsweise mehr als 1,0m oder auch 2,0 m vorgesehen werden, ohne dass sich im angehobenen Zustand der Plane größere Niederschlagsmengen ansammeln können. Hierdurch kann in jedem Fall gewährleistet werden, dass sich die Fahrzeug- oder Anhängeraufbauten dachseitig relativ einfach und schnell öffnen oder schließen lassen.

Dabei ist es günstig, wenn das Gestänge eine Hubschere bildet. Hierdurch ist auch über eine große Hubhöhe eine sehr stabile Abstützung der Hubfläche durch das Gestänge möglich. Erfindungsgemäß ist das Betätigungsmittel in einem Hohlraum des Dachspriegels untergebracht, wodurch der Dachspriegel mit der Hubeinrichtung eine geschlossene Einheit bildet, die beim Aus- und Einbau des Dachspriegels besonders einfach gehandhabt werden kann. Zudem wird das Betätigungsmittel bei dieser Anordnungsweise gegen äußere Beeinträchtigungen, wie beispielsweise mechanische Beaufschlagungen, geschützt.

Zudem ist es günstig, wenn der Hohlraum des Dachspriegels durch die Hubfläche verschließbar ist, wodurch das Betätigungsmittel besonders wirksam gegen äußere Beeinträchtigungen, wie beispielsweise auch gegen den Eintritt von Wasser, geschützt werden kann.

Vorteilhafterweise weist das Betätigungsmittel zur Beaufschlagung des Gestänges einen hydraulischen Antrieb auf. Hierdurch kann die Hubfläche in komfortabler Weise mit relativ großen Hubkräften beaufschlagt werden.

In einer hierzu alternativen Ausführungsform weist das Betätigungsmittel zur Beaufschlagung des Gestänges einen pneumatischen Antrieb auf. Hierdurch ist insbesondere bei einer möglichen Nutzung einer fahrzeugseitigen Druckluftversorgung eine relativ kostengünstige Ausführung der Planenhebevorrichtung möglich.

In einer weiteren alternativen Ausführungsform weist das Betätigungsmittel zur Beaufschlagung des Gestänges einen elektrischen Antrieb auf. Hierdurch ist in einfacher Weise eine besonders komfortable Steuerung der Planhebevorrichtung möglich, die ohne großen Aufwand auch teilweise automatisiert ausgebildet werden kann.

In einer weiteren vorteilhaften Ausführungsform weist das Betätigungsmittel zwei entgegen gesetzte Wirkrichtungen auf, wodurch das Gestänge nicht nur beim Anheben sondern auch beim Absenken der Hubfläche von dem Betätigungsmittel mit einer Antriebskraft beaufschlagt wird. Hierdurch kann sowohl beim Anheben als auch beim Absenken eine störungsfreie Positionsänderung der Hubfläche gewährleistet werden.

Ferner wird die genannte Aufgabe durch einen Fahrzeugaufbau mit wenigstens einer Planenhebevorrichtung in einer der oben genannten Ausführungsformen gelöst, wobei an dem Fahrzeugaufbau wenigstens eine weitere Planenhebevorrichtung vorgesehen ist und die Planenhebevorrichtungen über ein gemeinsames Steuerelement aktivierbar sind. Auf diese Weise ist eine komfortable und gleichzeitige Betätigung aller Planenhebevorrichtungen eines Fahrzeugaufbaus möglich. Zwischen den wenigstens zwei benachbarten Planenhebevorrichtungen ist dabei beispielsweise ein Abstand von mindestens 1,0 m oder auch 2,0 m vorgesehen.

Dabei ist es vorteilhaft, wenn die Planenhebevorrichtungen über hydraulische, pneumatische oder elektrische Versorgungsleitungen mit dem gemeinsamen Steuerelement verbunden sind, wobei die Versorgungsleitungen an wenigstens einer Seitenwand gehalten sind. Auf diese Weise können die zur Betätigung der Hubeinrichtung notwenigen Versorgungsleitungen derart in den Fahrzeugaufbau integriert werden, dass Sie beim Be- und Entladen des Fahrzeugs oder Anhängers nicht stören oder selbst beschädigt werden können.

Zudem ist es günstig, wenn die Planenhebevorrichtungen jeweils eine Anschlusseinrichtung aufweisen, die je nach Bedarf ein einfaches und schnelles Anschließen oder Lösen der betreffenden Verbindungsleitungen erlaubt. Hierdurch können die Dachspriegel vor dem Öffnen des Fahrzeugaufbaus in einfacher Weise von den jeweiligen Versorgungsleitungen getrennt werden, um ungestört von dem verbleibenden Fahrzeugaufbau abgenommen werden zu können. Zum Schließen des Fahrzeugdaches können die Dachspriegel dann wieder ungestört eingebaut und in einfacher Weise mit den Verbindungsleitungen verbunden werden.

In den Figuren ist eine beispielhafte Ausführungsform der Erfindung dargestellt. Es zeigen:
- Figur 1: eine perspektivische Darstellung eines Fahrzeugaufbaus mit zwei erfindungsgemäßen Planenhebevorrichtungen,
- Figur 2: eine Seitenansicht einer der Planenhebevorrichtungen nach Fig. 1 in einem ausgefahrenen Zustand und
- Figur 3: eine Seitenansicht der Planenhebevorrichtung nach Fig. 2 im eingefahrenen Zustand.

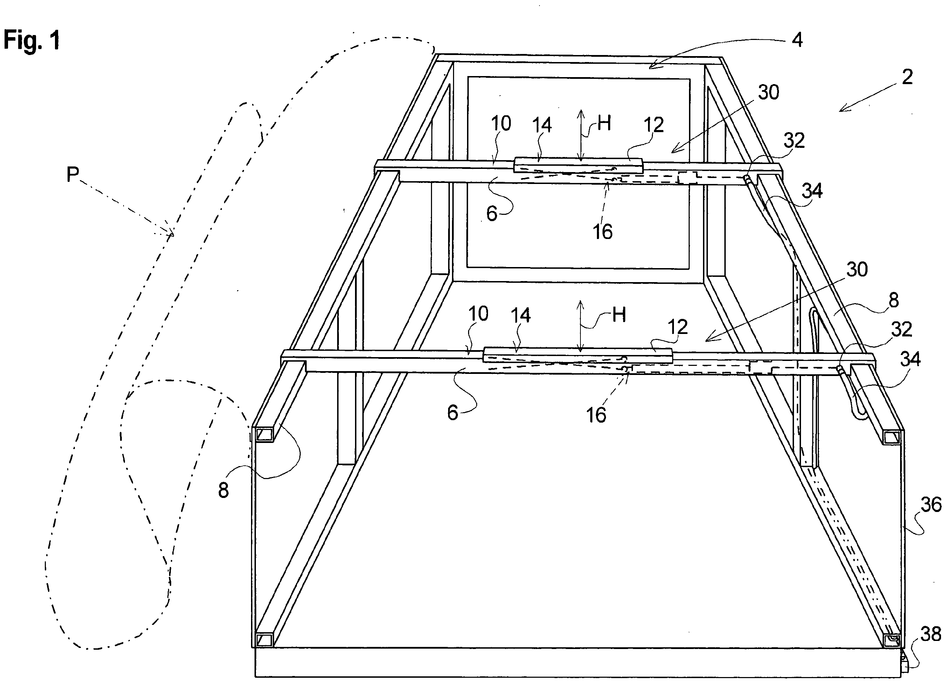

Fig. 1 zeigt einen hinteren Teil eines Fahrzeugaufbaus 2 eines Transportfahrzeuges oder Anhängers, der ein Fahrzeugdach 4 bildet, das mittels einer Plane P verschließbar ist. Als Auflager der Plane P dienen hierbei zwei Dachspriegel 6, die an ihren Enden jeweils mit einem Längsrahmen 8 des Fahrzeugaufbaus 2 verbunden und dabei quer zur Längsrichtung des Fahrzeugaufbaus 2 angeordnet sind.

An einer Oberseite 10 der beiden Dachspriegel 6 ist jeweils ein schienenförmiges Hebeelement 12 vorgesehen, das eine Hubfläche 14 ausbildet, an die die Plane P beim Schließen des Fahrzeugdaches 4 anlegbar ist. Über eine jeweilige Hubeinrichtung 16 können die Hebeelemente 12 betätigt werden, um die jeweilige Hubfläche 14 anzuheben oder abzusenken, wie durch Pfeile H dargestellt.

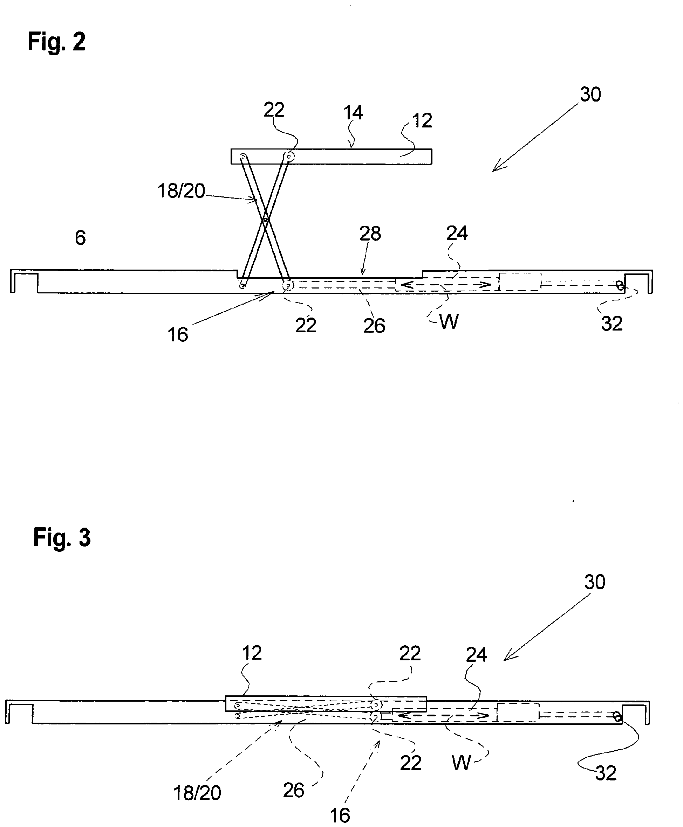

Hierzu weist die jeweilige Hubeinrichtung 16, wie insbesondere aus den Fig. 2 und 3 zu entnehmen ist, ein Gestänge 18 auf, das eine Hubschere 20 ausbildet, wobei zwei verschiebbare Enden der Hubschere 20 beispielsweise mit aus Kunststoff hergestellten Rollen 22 versehen sind, um eine exakte lineare Bewegung des jeweiligen Endes sicherzustellen.

Zum Verstellen der jeweiligen Hubschere 20 weist die Hubeinrichtung 16 ein Betätigungsmittel 24 auf, das in einem Hohlraum 26 des Dachspriegels 6 untergebracht ist, der über eine oberseitige Öffnung 28 des Dachspriegels 6 zugänglich ist. Die Hubeinrichtung 16 ist hierdurch vollständig an dem jeweiligen Spriegel 6 gehalten und bildet zusammen mit diesem eine Planenhebevorrichtung 30, die als Einheit ausgebildet ist. Bei angehobenem Hebeelement 12 gemäß Fig. 2 ist das im Hohlraum 26 angeordnete Betätigungsmittel 24 dabei über die Öffnung 28 zugänglich, während die Öffnung 28 im vollständig abgesenkten Zustand des Hebeelementes 12 durch dieses gemäß Fig. 3 verschlossen wird.

Gemäß der Fig. 1 bis 3 kann das Betätigungsmittel 24 beispielsweise durch eine hydraulische Kolben-Zylinder-Vorrichtung gebildet sein. Alternativ hierzu ist es auch möglich, das Betätigungsmittel 24 als pneumatischen oder elektrischen Antrieb auszubilden. In jedem Fall weist das Betätigungsmittel 24 zwei Wirkrichtungen W auf, um die Hubschere 20 in beide Richtungen mit einer Antriebskraft beaufschlagen zu können.

Die Versorgung des Betätigungsmittels 24 mit dem entsprechenden hydraulischen oder pneumatischen Druck beziehungsweise mit elektrischer Spannung erfolgt dabei über eine Anschlusseinrichtung 32 des Betätigungsmittels 24, die an einer Außenseite des Dachspriegels 6 vorgesehen ist.

Durch die jeweils als Einheit aus Dachspriegel 6 und Hubeinrichtung 6 ausgebildeten Planenhebevorrichtungen 30 werden beim Einbau der Dachspriegel 6 zum Schließen des Fahrzeugdaches 4 gleichzeitig auch die Hubeinrichtungen 16 im Bereich des Fahrzeugdaches 4 positioniert.

Wie aus Fig. 1 zu entnehmen ist, werden hierbei die Planenhebevorrichtungen 30 am Längsrahmen 8 des Fahrzeugaufbaus 2 befestigt und über die Anschlusseinrichtungen 32 mit Versorgungsleitungen 34 verbunden, die beispielsweise in einer Seitenwand 36 des Fahrzeugaufbaus verlegt sind. Die Versorgungsleitungen 34 sind zudem mit einem gemeinsamen Steuerelement 38 verbunden, das an einer Außenseite der Seitenwand 36 gehalten ist, vorzugsweise an einer Stirnseite des Fahrzeugaufbaus 2 (nicht dargestellt). Über dieses Steuerelement 38 können die Hubeinrichtungen 16 der Planenhebevorrichtungen 30 gemeinsam aktiviert werden, um die Hebeelemente 12 und die darauf lagernde Plane P je nach Bedarf anzuheben oder abzusenken.

Nach dem Abstellen des Fahrzeugs oder Anhängers kann der Fahrzeugführer über das Steuerelement 38 die auf den Planenhebevorrichtungen 30 aufliegende Plane P anheben, um ein Abfließen möglicher Niederschläge von der Mitte der Plane P über die Ränder des Fahrzeugdaches 4 sicherzustellen und dadurch eine Ansammlung größerer Niederschlagsmengen auf dem Fahrzeugdach 4 während der Standzeit zu vermeiden.

Vor der nächsten Fahrt kann der Fahrzeugführer dann über das Steuerelement 38 die Planenhebevorrichtungen 30 wieder absenken, um die Plane P während der Fahrt keiner übermäßigen Belastung, insbesondere durch den während der Fahrt anfallenden Winddruck, auszusetzen.

Zum Be- oder Entladen des Fahrzeugs oder Anhängers wird zunächst die Plane P entfernt. Nach Trennen der Versorgungsleitungen 34 von den Anschlusseinrichtungen 32 können dann auch die Planenhebevorrichtungen 30 von dem übrigen Fahrzeugaufbau 2 abgenommen werden, um das Fahrzeugdach 4 freizugeben.

## Patentansprüche

1. Planenhebevorrichtung für ein mit einer Plane (P) überspannbares Fahrzeugdach (4), wie insbesondere eines Nutzkraftfahrzeuges oder Anhängers,
mit einem an seinen Enden jeweils mit einem Längsrahmen (8) verbundenen und quer zu einer Längsrichtung eines Fahrzeugaufbaus angeordneten Dachspriegel (6), der eine Oberseite (10) aufweist, an der die Plane (P) anlegbar ist und an der ein Hebeelement (12) vorgesehen ist, mittels dem die anliegende Plane (P) anhebbar ist, wobei das Hebeelement (12) eine Hubfläche (14) aufweist,
**dadurch gekennzeichnet, dass** die Hubfläche (14) mittels einer vollständig am Dachspriegel (6) gehaltenen und dabei zusammen mit diesem als bauliche Einheit handhabbaren Hubeinrichtung (16) gegenüber dem Dachspriegel (6) beabstandbar ist, wobei ein Betätigungsmittel (24), mittels dem ein Gestänge der Hubeinrichtung (16) verstellbar ist, in einem Hohlraum (26) des Dachspriegels (6) untergebracht ist.

2. Planenhebevorrichtung nach Anspruch 1, **dadurch gekennzeichnet, dass** das Gestänge (18) eine Hubschere (20) bildet.

3. Planenhebevorrichtung nach Anspruch 1 oder 2, **dadurch gekennzeichnet, dass** der Hohlraum (26) des Dachspriegels (6) durch das Hebeelement (12) verschließbar ist.

4. Planenhebevorrichtung nach einem der Ansprüche 1 bis 3, **dadurch gekennzeichnet, dass** das Betätigungsmittel (24) zur Beaufschlagung des Gestänges (18) einen hydraulischen Antrieb aufweist.

5. Planenhebevorrichtung nach einem der Ansprüche 1 bis 4, **dadurch gekennzeichnet, dass** das Betätigungsmittel (24) zur Beaufschlagung des Gestänges (18) einen pneumatischen Antrieb aufweist.

6. Planenhebevorrichtung nach einem der Ansprüche 1 bis 4, **dadurch gekennzeichnet, dass** das Betätigungsmittel (24) zur Beaufschlagung des Gestänges (18) einen elektrischen Antrieb aufweist.

7. Planenhebevorrichtung nach einem der Ansprüche 1 bis 6, **dadurch gekennzeichnet, dass** das Betätigungsmittel (24) zwei entgegen gesetzte Wirkrichtungen (W) aufweist.

8. Fahrzeugaufbau mit einer Planenhebevorrichtung nach einem der Ansprüche 1 bis 7, **dadurch gekennzeichnet, dass** wenigstens eine weitere Planenhebevorrichtung (30) vorgesehen ist und die Planenhebevorrichtungen (30) über ein gemeinsames Steuerelement (38) aktivierbar sind.

9. Fahrzeugaufbau nach Anspruch 8, **dadurch gekennzeichnet, dass** die Planenhebevorrichtungen (30) über Versorgungsleitungen (34) mit dem gemeinsamen Steuerelement (38) verbunden sind, wobei die Versorgungsleitungen (34) an wenigstens einer Seitenwand (36) gehalten sind.

10. Fahrzeugaufbau nach Anspruch 9, **dadurch gekennzeichnet, dass** die Planenhebevorrichtungen (30) jeweils eine Anschlusseinrichtung (32) aufweisen, über die sie lösbar mit den Versorgungsleitungen (34) verbindbar sind.

## Claims

1. Awning lifting device for a vehicle roof (4), such as can be spanned by a tarpaulin (P) such as, in particular, a utility vehicle, heavy goods vehicle, or a trailer,
having a roof cross-member (6) at its ends, connected in each case to a longitudinal frame (8) and arranged transverse to a longitudinal direction of a vehicle body, which comprises an upper side (10) on which the tarpaulin (P) can be laid, and at which a lifting element (12) is provided, by means of which the tarpaulin (P) can be lifted, wherein the lifting element (12) comprises a lifting surface (14),
**characterized in that** the lifting surface (14) can be raised, such that a distance interval pertains in relation to the roof cross-member (6), by means of a lifting device (16) which is held in its entirety at the roof cross-member (6) and, in this situation, can handled together with this cross-member as a structural unit, wherein an actuation means (24) is accommodated in a cavity space (26) of the roof cross-member (6), by means of which a linkage of the lifting device (16) can be adjusted.

2. Awning lifting device according to claim 1, **characterized in that** the linkage (18) forms a scissor lift mechanism (20).

3. Awning lifting device according to claim 1 or 2, **characterized in that** the cavity space (26) of the roof cross-member (6) can be closed by the lifting element (12).

4. Awning lifting device according to any one of claims 1 to 3, **characterized in that** the actuating means (24) comprises a hydraulic drive for imposing force on the linkage (18).

5. Awning lifting device according to any one of claims 1 to 4, **characterized in that** the actuating means (24) comprises a pneumatic drive for imposing force on the linkage (18).

6. Awning lifting device according to any one of claims 1 to 4, **characterized in that** the actuating means (24) comprises a electric drive for imposing force on the linkage (18).

7. Awning lifting device according to any one of claims 1 to 6, **characterized in that** the actuating means (24) exhibits two opposed directions of effect (W).

8. Vehicle body with an awning lifting device according to any one of claims 1 to 7, **characterized in that** at least one further awning lifting device (30) is provided, and the awning lifting devices (30) can be activated by a common control element (38).

9. Vehicle body according to claim 8, **characterized in that** the awning lifting devices (30) are connected by control lines (34) to the joint control element (38), wherein the control lines (34) are secured to at least one side wall (36).

10. Vehicle body according to claim 9, **characterized in that** the awning lifting devices (30) in each case comprise a connection device (32), by means of which they can be connected to the control lines (34) in a detachable manner.

## Revendications

1. Dispositif de levage de bâches destiné à un toit (4) de véhicule, en particulier pour véhicule commercial ou remorque, qui peut être recouvert par une bâche (P),
comprenant un arceau de toit (6) relié à chacune de ses extrémités à un cadre longitudinal (8) et disposé transversalement par rapport à une direction longitudinale d'une superstructure de véhicule, l'arceau de toit présentant un côté supérieur (10), sur lequel la bâche (P) peut être placée, et sur lequel est prévu un élément de levage (12) au moyen duquel la bâche (P) adjacente peut être soulevée, l'élément de levage (12) présentant une surface de levage (14),
**caractérisé en ce que** la surface de levage (14) peut être espacée relativement de l'arceau de toit (6) au moyen d'un mécanisme de levage (16) complètement maintenu sur l'arceau de toit (6) et manoeuvrable ensemble avec ce dernier en tant qu'unité structurelle, dispositif dans lequel un moyen d'actionnement (24), au moyen duquel une tringlerie du mécanisme de levage (16) est déplaçable, est logé dans une cavité (26) de l'arceau de toit (6).

2. Dispositif de levage de bâches selon la revendication 1, **caractérisé en ce que** la tringlerie (18) forme des ciseaux de levage (20).

3. Dispositif de levage de bâches selon la revendication 1 ou 2, **caractérisé en ce que** la cavité (26) de l'arceau de toit (6) peut être fermée par l'élément de levage (12).

4. Dispositif de levage de bâches selon des revendications 1 à 3, **caractérisé en ce que** le moyen d'actionnement (24) comprend un actionneur hydraulique pour l'actionnement de la tringlerie (18).

5. Dispositif de levage de bâches selon l'une des revendications 1 à 4, **caractérisé en ce que** le moyen d'actionnement (24) comprend un actionneur pneumatique pour l'actionnement de la tringlerie (18).

6. Dispositif de levage de bâches selon l'une des revendications 1 à 4, **caractérisé en ce que** le moyen d'actionnement (24) comprend un actionneur électrique pour l'actionnement de la tringlerie (18).

7. Dispositif de levage de bâches selon l'une des revendications 1 à 6, **caractérisé en ce que** le moyen d'actionnement (24) présente deux directions d'action (W) opposées.

8. Superstructure de véhicule comprenant un dispositif de levage de bâches selon l'une des revendications 1 à 7, **caractérisée en ce qu'**il est prévu au moins un autre dispositif de levage de bâches (30) et les dispositifs de levage de bâches (30) peuvent être activés par un élément de commande (38) commun.

9. Superstructure de véhicule selon la revendication 8, **caractérisée en ce que** les dispositifs de levage de bâches (30) sont reliés avec l'élément de commande (38) commun par l'intermédiaire de conduits d'alimentation (34) qui sont maintenus sur au moins une paroi latérale (36).

10. Superstructure de véhicule selon la revendication 9, **caractérisée en ce que** les dispositifs de levage de bâches (30) comprennent chacun un agencement de raccordement (32), par l'intermédiaire duquel ils peuvent être raccordés de manière amovible aux conduits d'alimentation (34).
